# EUROPÄISCHE PATENTSCHRIFT

(11) **EP 2 521 241 B1**
(45) Veröffentlichungstag und Bekanntmachung des Hinweises auf die Patenterteilung: **21.05.2014**
(21) Anmeldenummer: 11164940.6
(22) Anmeldetag: 05.05.2011
(51) Int. Cl.: H02J 7/00

(54) **Feldgerät mit einer Ladestromregelungsvorrichtung**
Field device with a charge current regulation device
Appareil de champ avec un dispositif de régulation de courant de charge

(43) Veröffentlichungstag der Anmeldung: 07.11.2012
(73) Patentinhaber: VEGA Grieshaber KG, 77709 Wolfach (DE)
(72) Erfinder: Isenmann, Andreas, 77716, Haslach (DE); Allgaier, Volker, 77716, Haslach (DE); Griessbaum, Karl, 77796, Mühlenbach (DE)
(74) Vertreter: Kopf, Korbinian Paul

(56) Entgegenhaltungen:
- EP-A2- 2 202 598
- US-A1- 2003 126 474
- US-A1- 2005 017 693

## Beschreibung

### Gebiet der Erfindung

Die Erfindung betrifft die Energieversorgung von Feldgeräten. Insbesondere betrifft die Erfindung ein Feldgerät mit einer Ladestromregelungsvorrichtung für die Regelung eines Eingangsstroms des Feldgerätes und für die Regelung eines Ladestroms zum Laden eines Energiespeichers für das Feldgerät.

### Technischer Hintergrund der Erfindung

Feldgeräte werden beispielsweise in der Mess- und Automatisierungstechnik eingesetzt. Um unabhängig von einer Stromversorgung über ein Stromnetz oder für den Fall eines Stromausfalls vorbereitet zu sein, können Feldgeräte einen Energiespeicher aufweisen, welcher den Betrieb des Feldgerätes unabhängig von einer Stromversorgung über ein Stromnetz ermöglicht. Bei dem Energiespeicher kann es sich beispielsweise um aufladbare Batterien handeln.

Insbesondere kann es sich bei dem Energiespeicher um wiederaufladbare Batterien handeln, welche während des Betriebs des Feldgerätes über ein Stromnetz geladen werden.

US 2005/0017693 A1 beschreibt eine Energieversorgungseinheit für einen mobilen Computer zum Bereitstellen von Energie für den Betrieb des Computers und zum Laden einer Batterie, wobei der Energiebedarf für den Betrieb des Computers und zum Laden der Batterie variieren kann.

EP 2 202 598 A2 beschreibt ein Feldgerät mit einer Eingangsschaltung und einer Leistungsmanagementelektronik, welche dazu ausgelegt ist, einen ein Energie-Sollniveau überschießenden elektrischen Energiebetrag der an der Eingangsschaltung anliegenden elektrischen Energieversorgung in einen Speicher für elektrische Energie zu laden. Dies Feldgerät entspricht dem Oberbegriff des Anspruchs 1.

### Zusammenfassung der Erfindung

Bei Feldgeräten ist die Möglichkeit der Eingangsstrombelastung begrenzt, z. B. durch Schutzbeschaltungen für Maßnahmen zur elektromagnetischen Verträglichkeit oder durch Verpolschutzbeschaltungen (im Weiteren als Eingangsschutzbeschaltung bezeichnet).

Es kann als eine Aufgabe der Erfindung angesehen werden, den Ladevorgang eines Energiespeichers eines Feldgerätes zu verbessern.

Es ist ein Feldgerät mit einer Ladestromregelungsvorrichtung zum Laden eines Energiespeichers für ein Feldgerät und zum Regeln eines Ladestroms für den Energiespeicher gemäß den Merkmalen des unabhängigen Patentanspruchs angegeben. Weiterbildungen der Erfindung ergeben sich aus den Unteransprüchen und aus der folgenden Beschreibung.

Viele der im Folgenden in Hinblick auf die Ladestromregelungsvorrichtung beschriebenen Merkmale lassen sich auch als Verfahrensschritte implementieren und umgekehrt.

Gemäß einem ersten Aspekt der Erfindung ist ein Feldgerät mit einer Ladestromregelungsvorrichtung zum Laden eines Energiespeichers für das Feldgerät und zum Regeln eines Ladestroms für den Energiespeicher angegeben, welche eine Steuereinheit, eine Regeleinheit und einen Schaltregler aufweist.

Bei Schaltreglern für Ladeschaltungen zum Laden wiederaufladbarer Batterien ist der Eingangsstrom abhängig von der Eingangsspannung und der Ausgangsleistung. Bei steigender Eingangsspannung und konstanter Ausgangsleistung eines Schaltreglers sinkt der Eingangsstrom, welcher zum Laden des Energiespeichers genutzt wird, ohne Regelung ab.

Mit dem sinkenden Eingangsstrom des Schaltreglers sinkt auch die gesamte Stromaufnahme des Feldgerätes, welches den Schaltregler und die Ladeschaltung für den Energiespeicher umfasst, ab, so dass eine mögliche Eingangsschutzbeschaltung in diesem Fall nicht mehr ausgelastet ist. Demnach kann die Ausgangsleistung des Schaltreglers, von welcher die Ladezeit des Energiespeichers abhängt, erhöht werden, was zu einer wiederum erhöhten Stromaufnahme des Feldgerätes führt, so dass die Eingangsschutzbeschaltung des Feldgerätes ausgelastet ist.

Damit wird der Ladevorgang des Energiespeichers, beispielsweise von wiederaufladbaren Batterien, beschleunigt und gleichzeitig eine Überlastung von Eingangsschutzbeschaltungen des Feldgerätes verhindert.

Die Bauteile in der Eingangsschutzbeschaltung müssen für den maximalen Belastungsfall ausgelegt sein. Bei vorgegebener Ausgangsleistung eines

Schaltreglers für eine Ladeschaltung ist dies der Fall bei einer kleinen Eingangsspannung, da im Gegenzug ein hoher Eingangsstrom notwendig ist, um die vorgegebene Ausgangsleistung zu erreichen. Im Gegensatz hierzu sinkt der Eingangsstrom eines Schaltreglers zum Laden von wiederaufladbaren Batterien bei einer ansteigenden Eingangsspannung und konstant bleibender Ausgangsleistung.

Im hohen Eingangsspannungsbereich, was einen niedrigen Eingangsstrom bei vorgegebener Ausgangsleistung bedeutet, ist eine Eingangsschutzbeschaltung nicht maximal ausgelastet, so dass ein zu ladender wiederaufladbarer Energiespeicher, beispielsweise wiederaufladbare Batterien, nicht schnellstmöglich geladen wird.

Die Steuereinheit dient der Vorgabe einer Führungsgröße für die Regeleinheit. Bei der Führungsgröße kann es sich beispielsweise um einen höchstens zulässigen Eingangsstrom für eine Eingangsschutzbeschaltung des Feldgerätes handeln. Die Steuereinheit kann manuell oder automatisiert konfiguriert werden, indem die Führungsgröße beispielsweise in Abhängigkeit externer Parameter, wie beispielsweise einer Umgebungstemperatur des Feldgerätes, angepasst wird.

Die Regeleinheit kann eingerichtet sein, den Eingangsstrom des Schaltreglers zum Laden des Energiespeichers zu regeln, indem von der Regeleinheit eine Stellgröße an den Schaltregler übennittelt wird.

Die Regeleinheit kann aber auch eingerichtet sein, eine Stellgröße an einen elektrischen Verbraucher des Feldgerätes zu übertragen, so dass der elektrische Verbraucher seine Stromaufnahme reduziert, wodurch sich wiederum der Eingangsstrom des Feldgerätes reduziert, so dass eine Eingangsschutzbeschaltung des Feldgerätes nicht überlastet wird oder bei konstant bleibendem Eingangsstrom der Ladestrom erhöht werden kann.

Der Schaltregler kann eine Eingangsspannung und einen Eingangsstrom für eine Ladeschaltung vorgeben, welche einen Ladevorgang des Energiespeichers des Feldgerätes durchführt.

Der Eingangsstrom des elektrischen Verbrauchers und der Eingangsstrom des Schaltreglers zum Laden des Energiespeichers geben den gesamten Eingangsstrom des Feldgerätes vor, welcher durch die Eingangsschutzbeschaltung des Feldgerätes fließt.

Mithin kann der Eingangsstrom des Feldgerätes dadurch geregelt werden, dass die Regeleinheit den Eingangsstrom des Schaltreglers oder den Eingangsstrom des elektrischen Verbrauchers anpasst.

Über die Steuereinheit für die Regeleinheit kann vorgegeben werden, ob und in welcher Weise der Eingangsstrom des elektrischen Verbrauchers und/oder der Eingangsstrom des Schaltreglers zum Laden des Energiespeichers anzupassen ist.

Gemäß einem weiteren Aspekt der Erfindung ist ein Feldgerät mit einer Ladestromregelungsvorrichtung zum Laden eines Energiespeichers für das Feldgerät und zum Regeln eines Ladestroms für den Energiespeicher, ohne dass hierbei ein Grenzwert für einen Eingangsstrom des Feldgerätes überschritten wird, angegeben. Dabei weist die Ladestromregelungsvorrichtung einen Stromfühlwiderstand, einen Operationsverstärker und einen Schaltregler auf.

Durch den Stromfühlwiderstand kann der Eingangsstrom des Feldgerätes fließen, wodurch an dem Stromfühlwiderstand eine entsprechende Spannung abfällt. Die an dem Stromfühlwiderstand abfallende Spannung kann als Eingangsspannung für den Operationsverstärker genutzt werden. Weiterhin ist ein Ausgangswert des Operationsverstärkers auf den Schaltregler führbar, so dass ein Aufnahmestrom oder ein Ausgangsstrom des Schaltreglers verändert werden kann. Dabei wird der Schaltregler von dem Operationsverstärker so angesteuert, dass der Aufnahmestrom oder der Ausgangsstrom des Schaltreglers so verändert wird, dass der Eingangsstrom des Feldgerätes, welcher durch den Stromfühlwiderstand fließt, den Grenzwert des Eingangsstroms des Feldgerätes nicht übersteigt.

Der Eingangsstrom des Feldgerätes bzw. der Aufnahmestrom oder der Ausgangsstrom des Schaltreglers stellen die zu regelnde Größe, mithin die Regelgröße, dar.

Der Operationsverstärker stellt in Verbindung mit dem Stromfühlwiderstand einen Regler bzw. eine Regeleinheit dar. Die Führungsgröße des Reglers ist der Grenzwert des Eingangsstroms des Feldgerätes.

Der tatsächliche Wert des Eingangsstroms des Feldgerätes wird mittelbar über eine abfallende Spannung an dem Stromfühlwiderstand ermittelt, wobei die an dem Stromfühlwiderstand abfallende Spannung von dem Eingangsstrom des Feldgerätes, welcher durch den Stromfühlwiderstand fließt, hervorgerufen wird.

Aus einem Vergleich des Sollwertes des Eingangsstroms des Feldgerätes mit dem tatsächlichen. Wert des Eingangsstroms des Feldgerätes wird an dem Operationsverstärker ein Ausgangssignal hervorgerufen, welches als Stellgröße für die Stromaufnahme des Schaltreglers dienen kann, so dass sich aus einer Anpassung des Aufnahmestroms oder des Ausgangsstroms des Schaltreglers eine Anpassung des Eingangsstroms des Feldgerätes ergibt.

Ein Ausgangswert des Operationsverstärkers kann selbstverständlich auch auf einen elektrischen Verbraucher eines Feldgerätes geführt werden, so dass ein Eingangsstrom des elektrischen Verbrauchers geregelt wird, wodurch der Eingangsstrom des Feldgerätes ebenfalls angepasst wird.

Eine Steuereinheit kann so mit dem Operationsverstärker verbunden sein, dass ein Sollwert für den Eingangsstrom des Feldgerätes vorgegeben wird.

Gemäß einer weiteren Ausführungsform der Erfindung ist der Operationsverstärker als Differenzverstärker geschaltet, so dass eine an zwei Eingängen des Operationsverstärkers anliegende Spannungsdifferenz mit einem Verstärkungsfaktor versehen an einem Ausgang des Operationsverstärkers ausgegeben wird.

Die Differenz zwischen einem Sollwert für den Eingangsstrom des Feldgerätes und dem tatsächlich gemessenen Wert des Eingangsstroms des Feldgerätes verursacht dabei den Ausgabewert des Operationsverstärkers, welcher als Stellgröße für die Stromaufnahme des Schaltreglers und/oder des elektrischen Verbrauchers des Feldgerätes dient.

Gemäß einer weiteren Ausführungsform der Erfindung handelt es sich bei dem Stromfühlwiderstand um einen ohmschen Widerstand.

Eine Ladestromregelungsvorrichtung wie oben und im Folgenden beschrieben, eignet sich insbesondere für den Einsatz in Feldgeräten, welche mit Gleichstrom und in einem GIcichspanmmgsbcreich von insbesondere 12 Volt, 24 Volt oder 32 Volt betrieben werden.

Selbstverständlich ist ein Betrieb bei beliebigen anderen Spannungs- und Stromwerten ebenfalls möglich.

Gemäß einem weiteren Aspekt der Erfindung wird ein Feldgerät angegeben, welches eine Ladestromregelungsvorrichtung wie oben und im Folgenden beschrieben, aufweist.

Gemäß einer weiteren Ausführungsform der Erfindung weist das Feldgerät weiterhin eine Eingangsschutzbeschaltung, einen Energiespeicher, wenigstens einen elektrischen Verbraucher und eine Ladeschaltung auf.

Die Eingangsschutzbeschaltung stellt dabei einen limitierenden Faktor für eine Eingangsstrombelastung des Feldgerätes dar. In anderen Worten kann eine zu große Eingangsstrombelastung zu einer Beschädigung der Eingangsschutzbeschaltung führen.

Der Energiespeicher ist ausgeführt, den elektrischen Verbraucher mit elektrischer Energie zu versorgen.

Die Ladeschaltung ist ausgeführt, den Energiespeicher so mit Energie zu versorgen, dass der Energiespeicher die zugeführte Energie speichert, wobei die Ladestromregelungsvorrichtung den der Ladeschaltung zugeführten Ladestrom regelt.

Bei der Eingangsschutzbeschaltung kann es sich beispielsweise um Maßnahmen zur elektromagnetischen Verträglichkeit oder um Maßnahmen zum Verpolschutz handeln.

Als Energiespeicher kann jegliches Bauteil genutzt werden, welches geeignet ist, elektrische Energie, insbesondere in chemischer Form, zu speichern. Der Energiespeicher dient dabei der Vorhaltung von Energie, um das Feldgerät abseits von der Erreichbarkeit eines Stromnetzes oder im Falle eines Stromausfalls zu betreiben.

Bei dem wenigstens einen elektrischen Verbraucher des Feldgerätes kann es sich beispielsweise um eine Messeinrichtung oder eine Auswerteeinrichtung für von einer Messeinrichtung erfasste Daten handeln.

Beispielsweise kann es sich bei der Messeinrichtung um einen Füllstandssensor, einen Drucksensor oder einen Durchflusssensor handeln. Selbstverständlich können beispielsweise Sensoren für beliebige physikalische Größen in einem Feldgerät wie oben und im Folgenden beschrieben, enthalten sein.

Bei dem elektrischen Verbraucher kann es sich aber auch um eine Auswerteeinheit handeln, welche eine Reihe erfasster Werte mit wenigstens einem Messwert erhält und weiter verarbeiten, beispielsweise für die Übertragung zu einer weiteren Auswerteeinheit vorbereiten, aber auch die Werte für die spätere Verarbeitung aufbereiten kann.

Selbstverständlich kann das Feldgerät wie oben und im Folgenden beschrieben, auch eine Vielzahl von elektrischen Verbrauchern, beispielsweise eine Vielzahl von Sensoren und/oder beispielsweise eine Vielzahl von Auswerteeinheiten, enthalten.

Die Ladeschaltung ist ausgeführt, von dem Schaltregler der Ladestromregelungsvorrichtung so mit Energie versorgt zu werden, dass der an die Ladeschaltung angeschlossene Energiespeicher geladen wird.

Die Ladestromregelungsvorrichtung regelt dabei den Ladestrom der Ladeschaltung und die Stromaufnahme des wenigstens einen elektrischen Verbrauchers so, dass eine maximal zulässige Belastung der Eingangsschutzbeschaltung nicht überschritten wird und der Energiespeicher dennoch schnellstmöglich geladen wird.

Eine wie oben und im Folgenden beschriebene Ladestromregelungsvorrichtung erlaubt das schnellstmögliche Laden des Energiespeichers, da der Ladestrom in Abhängigkeit des von dem wenigstens einen elektrischen Verbraucher aufgenommenen Stroms geregelt werden kann, so dass stets die maximale Stromlieferkapazität des Feldgerätes unter Berücksichtigung der maximalen Belastung der Eingangsschutzbeschaltung ausgeschöpft werden kann.

Gemäß einer weiteren Ausführungsform der Erfindung ist der Energiespeicher eine Einheit wiederaufladbarer Batterien.

Dabei kann die Einheit wiederaufladbarer Batterien wenigstens eine wiederaufladbare Batterie, aber auch eine Vielzahl wiederaufladbarer Batterien aufweisen.

Gemäß einer weiteren Ausführungsform der Erfindung ist der elektrische Verbraucher des Feldgerätes ein Füllstandsmessgerät.

Gemäß einer weiteren Ausführungsform der Erfindung ist der elektrische Verbraucher des Feldgerätes ein Durchflussmessgerät.

Gemäß einer weiteren Ausführungsform der Erfindung ist der elektrische Verbraucher des Feldgerätes ein Druckmessgerät.

Selbstverständlich kann das Feldgerät wie oben und im Folgenden beschrieben neben den Messgeräten auch eine zugehörige Auswerteeinheit aufweisen. Auch kann in einem Feldgerät wie oben und im Folgenden beschrieben eine Vielzahl von Messgeräten, auch für verschiedene physikalische Größen, enthalten sein.

Die Auswerteeinheiten können die Messwerte von den Messgeräten über drahtlose oder drahtgebundene Übertragung von Daten erhalten. Selbstverständlich können die Auswertegeräte aufbereitete Daten aus den Messwerten ebenfalls drahtlos oder drahtgebunden an weitere Auswerteeinheiten übertragen.

Gemäß einer weiteren Ausführungsform der Erfindung kann eine Stromaufnahme des elektrischen Verbrauchers so verändert werden, dass der Ladestrom für die Energiespeichereinheit und mithin der Eingangsstrom des Feidgerätes einem vorgebbaren Wert folgen kann.

Beispielsweise kann die Stromaufnahme des elektrischen Verbrauchers in Abhängigkeit einer Umgebungstemperatur, einer Eingangsspannung oder anderen externen physikalischen Größen sowie in Abhängigkeit des Ladestandes des Energiespeichers geregelt werden.

Die Regelung der Stromaufnahme des elektrischen Verbrauchers kann beispielsweise erfolgen, indem eine Steuereinheit eine Priorisierung des Ladevorgangs des Energiespeichers über die Regeleinheit vornimmt.

Gemäß einer weiteren Ausführungsform der Erfindung kann der vorgebbare Wert für den Ladestrom des Energiespeichers konstant gehalten werden.

Damit ist die Stromaufnahme des elektrischen Verbrauchers durch die Regeleinheit ebenfalls konstant zu halten, insofern die Summe des Ladestroms und der Stromaufnahme des elektrischen Verbrauchers dem maximalen Eingangsstrom des Feldgerätes über die Eingangsschutzbeschaltung entspricht.

Selbstverständlich kann sowohl der Ladestrom für den Energiespeicher als auch die Stromaufnahme des elektrischen Verbrauchers so geregelt werden, dass die Summe des Ladestroms und der Stromaufnahme des elektrischen Verbrauchers lediglich einem Teil des maximalen Eingangsstroms des Feldgerätes entspricht. Zur Festlegung des maximalen Eingangsstroms, welcher selbstverständlich über die Zeit auch variieren kann, kann die Steuereinheit für die Regelung des Ladestroms und der Stromaufnahme des elektrischen Verbrauchers externe Parameter, beispielsweise die Umgebungstemperatur, heranziehen.

Insbesondere ist es möglich, dass die maximale Belastung der Eingangsschutzbeschaltung mit einem Eingangsstrom variieren kann und die Aufnahme des Ladestroms so geregelt wird, dass die Größe des Ladestromwertes einem variierenden Eingangsstromwert folgt.

Gemäß einem für das Verständnis der Erfindung hilfreichen Aspekt wird ein Verfahren zur Regelung eines Ladestroms angegeben, welches in einem ersten Schritt einen Eingangsstrom eines Feldgerätes erfasst und in einem zweiten Schritt einen Ladestrom regelt, so dass die Summe des Ladestroms und einer Stromaufnahme eines elektrischen Verbrauchers einen vorgebbaren Wert für den Eingangsstrom nicht überschreitet.

Gemäß einer weiteren Ausführungsform weist das Verfahren weiterhin den Schritt Regeln der Stromaufnahme eines elektrischen Verbrauchers auf.

Selbstverständlich kann sowohl der Ladestrom als auch die Stromaufnahme des elektrischen Verbrauchers einzeln und/oder gemeinsam geregelt werden.

Eine wie oben und im Folgenden beschriebene Ladestromregelungsvorrichtung zum Laden eines Energiespeichers für ein Feldgerät misst den Eingangsstrom des Feldgerätes und regelt beispielsweise an einer getakteten Ladeschaltung den Ladestrom für den Energiespeicher entsprechend dem gemessenen Eingangsstrom. Bei gleichbleibender Ausgangsleistung der Ladeschaltung und steigender Eingangsspannung an der Ladeschaltung ergäbe sich ein sinkender Ladestrom, welcher zu einem sinkenden Eingangsstrom des Feldgerätes führte. Die Ladestromregelungsvorrichung erkennt das Absinken des Eingangsstroms des Feldgerätes und regelt die Ladeschaltung für den Energiespeicher so, dass der Ladestrom und damit der Eingangsstrom des Feldgerätes ansteigen. Damit kann eine Eingangsschutzbeschaltung des Feldgerätes beispielsweise mit einem konstanten Eingangsstrom belastet oder auch maximal ausgenutzt werden.

Die Ladestromregelungsvorrichtung wie oben und im Folgenden beschrieben, kann auch benutzt werden, um Eingangsschutzbeschaltungen für kleinere Eingangsströme zu bemessen, da die Ladestromregelungsvorrichtung nicht nur zur Erhöhung des Ladestroms, sondern auch zu dessen Begrenzung auf einen vorgebbaren Höchstwert ausgeführt sein kann. Ein schnelles Laden des Energiespeichers des Feldgerätes ist dennoch möglich, da die Ladestromregelungsvorrichtung wie oben und im Folgenden beschrieben, geeignet ist, jegliche Stromdifferenz zwischen der tatsächlichen Stromaufnahme eines elektrischen Verbrauchers des Feldgerätes und dem maximal möglichen Eingangsstrom des Feldgerätes als Ladestrom für den Energiespeicher zu verwenden.

Im Folgenden werden mit Verweis auf die Figuren Ausführungsbeispiele der Erfindung beschrieben.

### Kurze Beschreibung der Figuren

Fig. 1 zeigt ein Feldgerät mit einer Ladestromregelungsvorrichtung gemäß einem Ausführungsbeispiel der Erfindung.
Fig. 2 zeigt ein Feldgerät mit einer Ladestromregelungsvorrichtung gemäß einem weiteren Ausführungsbeispiel der Erfindung.
Fig. 3 zeigt ein Flussdiagramm eines für das Verständnis der Erfindung hilfreichen Regelungsverfahrens.
Fig. 4a zeigt ein Feldgerät mit einem elektrischen Verbraucher gemäß einem weiteren Ausführungsbeispiel der Erfindung.
Fig. 4b zeigt ein Feldgerät mit einem elektrischen Verbraucher gemäß einem weiteren Ausführungsbeispiel der Erfindung.
Fig. 4c zeigt ein Feldgerät mit einem weiteren elektrischen Verbraucher gemäß einem Ausführungsbeispiel der Erfindung.
Fig. 5 zeigt ein Flussdiagramm eines für das Verständnis der Erfindung hilfreichen Verfahrens zur Ladestromregelung.

### Detaillierte Beschreibung von Ausführungsbeispielen

Die Darstellungen in den Figuren sind schematisch und nicht maßstäblich.

Werden in der folgenden Figurenbeschreibung gleiche Bezugsziffern verwendet, so betreffen diese gleiche oder ähnliche Elemente.

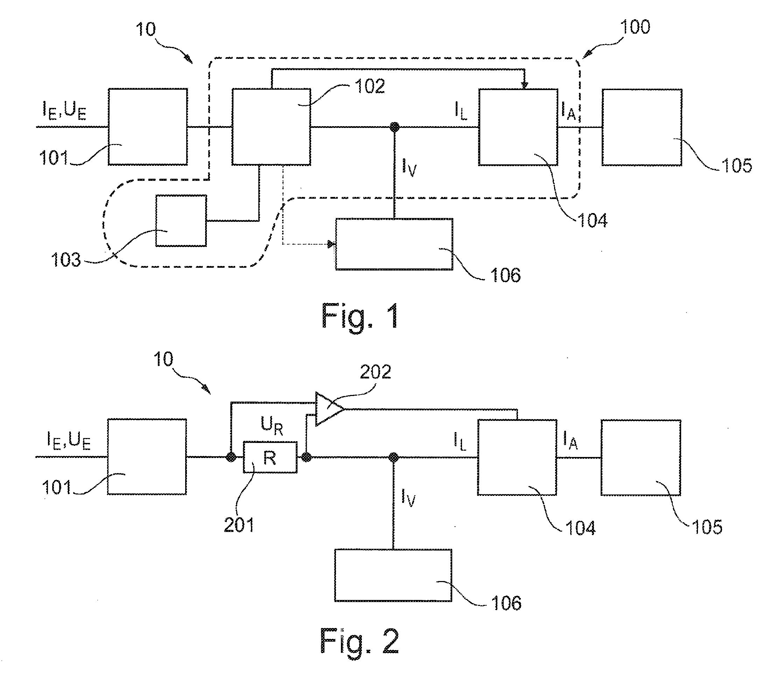

Fig. 1 zeigt ein Feldgerät 10 gemäß einem Ausführungsbeispiel der Erfindung. Das Feldgerät 10 weist eine Ladestromregelungsvorrichtung 100, eine Eingangsschutzbeschaltung 101, einen Energiespeicher 105 und einen elektrischen Verbraucher 106 auf.

Die Ladestromregelungsvorrichtung 100 weist eine Regeleinheit 102, eine Steuereinheit 103 und einen Schaltregler 104 auf.

Das Feldgerät 10 wird mit der Spannung U_{E} und dem Strom I_{E} über die Eingangsschutzbeschaltung 101 versorgt. Die Regeleinheit 102 erhält von der Steuereinheit 103 eine Führungsgröße, nämlich den Sollwert des Eingangsstroms I_{E}, und kann über eine Stellgröße auf den Schaltregler 104 oder den elektrischen Verbraucher 106 so wirken, dass entweder der Schaltregler 104 einen Aufnahmestrom I_{L} oder einen Ausgangsstrom I_{A} oder der elektrische Verbraucher 106 eine Stromaufnahme I_{V} verändert. Der Ausgangsstrom I_{A} des Schaltreglers 104 entspricht dem Ladestrom für den Energiespeicher 105.

Die Regeleinheit 102 kann so ausgeführt sein, dass sie eine Stellgröße auf den Schaltregler 104 und/oder den elektrischen Verbraucher 106 ausgibt. Durch die gestrichelte Linie von der Regeleinheit 102 auf den elektrischen Verbraucher 106 wird dargestellt, dass diese Stellgröße optional ist. Die Stromaufnahme I_{V} kann alternativ oder zusätzlich zu dem Aufnahmestrom I_{L} oder dem Ausgangsstrom I_{A} des Schaltreglers 104 geregelt werden.

Aus Fig. 1 ergibt sich, dass die Summe der Ströme I_{V} und I_{L} im Wesentlichen dem Eingangsstrom I_{E} entspricht. Abweichungen können durch die Stromaufnahme der Bauteile verursacht werden.

Fig. 2 zeigt ein Feldgerät 10 gemäß einem weiteren Ausführungsbeispiel der Erfindung. Das Feldgerät 10 weist eine Eingangsschutzbeschaltung 101, einen Schaltregler 104, einen Energiespeicher 105 und einen elektrischen Verbraucher 106 auf.

Die Regeleinheit 102 ist in Fig. 2 umgesetzt mittels des Stromfühlwiderstandes R 201 und des Operationsverstärkers 202.

Der Eingangsstrom I_{E} wird durch die Eingangsschutzbeschaltung und den Stromfühlwiderstand 201 geführt, wobei an dem Stromfühlwiderstand 201 durch den hindurchfließenden Eingangsstrom I_{E} die Spannung U_{R} abfällt. Der Operationsverstärker 202 ist mit der Spannung U_{R} als Eingangsspannung betreibbar und ist mit dem Schaltregler 104 so verschaltet, dass ein Ausgangssignal des Operationsverstärkers 202 so auf den Schaltregler 104 geführt wird, dass der Schaltregler 104 den Aufnahmestrom I_{L} oder den Ausgangsstrom I_{A} in Abhängigkeit des Ausgangssignals des Operationsverstärkers 202 so anpassen kann, dass sich der Eingangsstrom I_{E} ebenfalls verändert.

Für die Regelung des Eingangsstroms I_{E} gilt folgender Zusammenhang: Mit steigendem Eingangsstrom I_{E}, beispielsweise durch einen steigenden Ladestrorn I_{L}, steigt die Spannung U_{R} an dem Stromfühlwiderstand R 201 und mithin steigt das Ausgangssignal des Operationsverstärkers 202, welches auf den Schaltregler 104 geführt wird. Das gestiegene Ausgangssignal des Operationsverstärkers 202 bewirkt in dem Schaltregler 104, dass der Aufnahmestrom I_{L} oder der Ausgangsstrom I_{A} gesenkt wird, was eine Senkung des Eingangsstroms I_{E} zur Folge hat, so dass die Spannung U_{R} an dem Stromfühlwiderstand R 201 ebenfalls sinkt, was seinerseits eine Anpassung des Ausgangssignals des Operationsverstärkers 202 zur Folge hat.

Selbstverständlich kann der Operationsverstärker 202 sowohl so geschaltet werden, dass sich ein Ausgangssignal des Operationsverstärkers 202 proportional, als auch umgekehrt proportional zu der Spannung U_{R} verhält. In anderen Worten bedeutet dies, dass das Ausgangssignal des Operationsverstärkers 202 im ersten Fall mit einer steigenden Spannung U_{R} ebenfalls steigt (was gleichzeitig bedeutet, dass eine fallende Spannung U_{R} ein fallendes Ausgangssignal bewirkt) und im zweiten Fall mit einer steigenden Spannung U_{R} fällt (was gleichzeitig bedeutet, dass eine fallende Spannung U_{R} ein steigendes Ausgangssignal bewirkt).

Der Schaltregler 104 kann so ausgeführt sein, dass er einen Aufnahmestrom I_{L} wie oben und im Folgenden beschrieben, anpasst.

Selbstverständlich kann dem Operationsverstärker 202 ein Sollwert für den Eingangsstrom I_{E} vorgegeben werden, wobei der Sollwert für den Eingangsstrom I_{E} mittelbar über die Vorgabe einer Referenzspannung, mit welcher die Spannung U_{R} verglichen wird, erfolgt. Die Vorgabe des Sollwertes kann über eine Steuereinheit erfolgen.

Selbstverständlich kann der Operationsverstärker 202 sein Ausgangssignal auch an den elektrischen Verbraucher 106 liefern, wobei der elektrische Verbraucher 106 so ausgeführt sein kann, dass dieses Ausgangssignal des Operationsverstärkers 202 als Stellgröße für die Anpassung der Arbeitsweise des elektrischen Verbrauchers und mithin des Stromverbrauchs und der Stromaufnahme I_{V} genutzt werden kann.

Die Anpassung der Arbeitsweise des elektrischen Verbrauchers wie oben und im Folgenden beschrieben, kann insbesondere dadurch erfolgen, dass eine Datenerfassungsrate für die Messwerte verändert wird oder energieaufwändige Rechen- und Auswerteoperationen optional durchgeführt werden.

Insbesondere kann die Stromaufnahme des elektrischen Verbrauchers wie oben und im Folgenden beschrieben, reduziert werden, wenn die Datenerfassungsrate gesenkt wird und/oder energieaufwändige Rechen- und Auswerteoperationen nicht durchgeführt oder nur in reduziertem Umfang durchgeführt werden.

Die Reduzierung der Datenerfassungsrate kann gestuft oder stufenlos erfolgen.

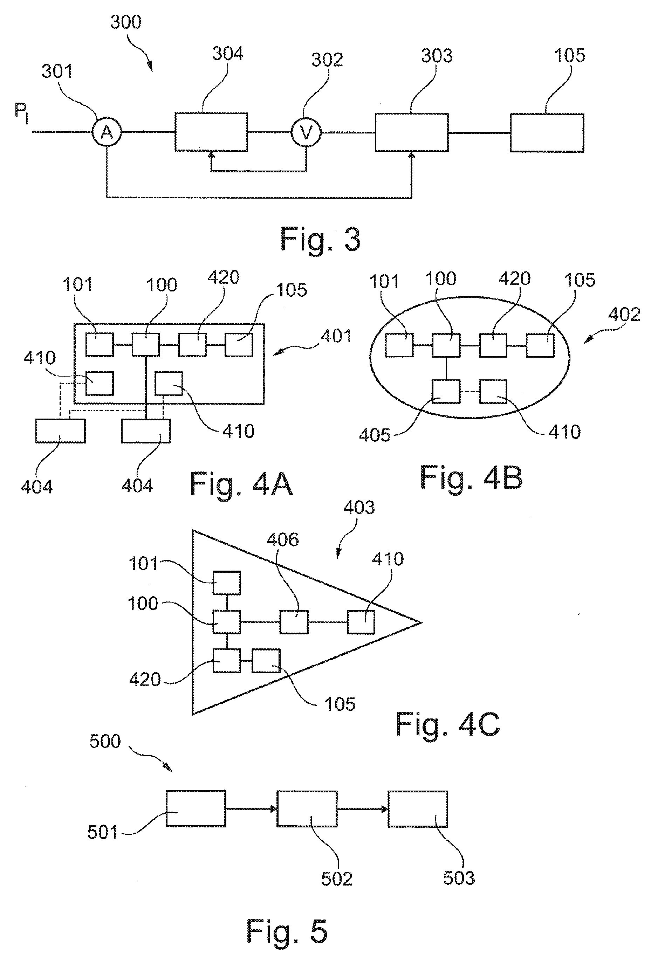

Fig. 3 zeigt ein Flussdiagramm eines für das Verständnis der Erfindung hilfreichen Regelungsverfahrens 300.

Der Strom der Energieversorgung P₁ wird mit einem Strommessgerät 301 gemessen und dient als Eingabewert für die Stromregelung 303. Ein Spannungswert gemessen mit dem Spannungsmesser 302 dient als Eingangswert für die Spannungsregelung 304. Über die so geregelte Energieversorgung wird der Energiespeicher 105 geladen.

Fig. 4a zeigt ein Feldgerät 401 gemäß einem Ausführungsbeispiel der Erfindung.

Das Feldgerät 401 weist eine Eingangsschutzbeschaltung 101, eine Ladestromregelungsvorrichtung 100, eine Ladeschaltung 420 und einen Energiespeicher 105 auf. Weiterhin weist das Feldgerät 401 einen Füllstandssensor 404 und eine Auswerteeinheit 410 auf. Selbstverständlich kann das Feldgerät 401 auch eine Vielzahl an Füllstandssensoren 404 und eine Vielzahl an Auswerteeinheiten 410 aufweisen.

Die Ladestromregelungsvorrichtung 100 regelt den Ladestrom zum Laden des Energiespeichers 105 so, dass die Summe des Ladestroms und einer Stromaufnahme der Füllstandssensoren 404 und der Äuswerteeinheiten 410 den maximal zulässigen Wert eines Eingangsstroms des Feldgerätes nicht überschreitet.

Das Feldgerät 401 kann auch örtlich getrennt sein von den Füllstandssensoren 404, wobei die Füllstandssensoren 404 die Messwerte drahtlos oder drahtgebunden an die Auswerteeinheiten 410 übertragen können.

Fig. 4b zeigt ein Feldgerät 402 gemäß einem weiteren Ausführungsbeispiel der Erfindung. Das Feldgerät 402 weist eine Eingangsschutzbeschaltung 101, eine Ladestromregelungsvorrichtung 100, eine Ladeschaltung 420, einen Energiespeicher 105, einen Drucksensor 405 und eine Auswerteeinheit 410 auf.

Wie das Feldgerät 401 kann auch das Feldgerät 402 eine. Vielzahl an Drucksensoren 405 und eine Vielzahl an Auswerteeinheiten 410 aufweisen.

Die Ladestromregelungsvorrichtung 100 kann selbstverständlich in allen Feldgeräten 10, 401, 402, 403 wie oben und im Folgenden beschrieben, dazu genutzt werden, sowohl den Ladestrom für den Energiespeicher 105 als auch die Stromaufnahme des elektrischen Verbrauchers, beispielsweise der Sensoren 404, 405, 406 und der Auswerteeinheit 410, zu regeln.

Fig. 4c zeigt ein Feldgerät 403 gemäß einem weiteren Ausführungsbeispiel der Erfindung.

Das Feldgerät 403 weist eine Eingangsschutzbeschaltung 101, eine Ladestromregelungsvorrichtung 100, einen Energiespeicher 105, eine Ladeschaltung 420, einen Durchflusssensor 406 und eine Auswerteeinheit 410 auf

Die Ladeschaltung 420 wie oben und im Folgenden beschrieben, dient zusammen mit dem Schaltregler 104 der Versorgung des Energiespeichers 105 mit Ladestrom. Selbstverständlich kann ein Feldgerät wie oben und im Folgenden beschrieben, auch unterschiedliche Sensoren, beispielsweise einen Drucksensor, einen Durchflusssensor und einen Füllstandssensor, aufweisen. Die Messwerte der Sensoren können sowohl von einer Auswerteeinheit 410 als auch von mehreren Auswerteeinheiten 410 erfasst, verarbeitet und weitergemeldet werden.

Fig. 5 zeigt ein für das Verständnis der Erfindung hilfreiches Verfahren 500 zur Regelung eines Ladestroms.

In einem ersten Schritt 501 erfolgt das Erfassen eines Eingangsstroms I_{E}. In einem zweiten Schritt 502 folgt das Regeln eines Ladestroms I_{L}, wobei die Summe des Ladestroms I_{L} und einer Stromaufnahme I_{V} eines elektrischen Verbrauchers dem Eingangsstrom I_{E} eines Feldgerätes im Wesentlichen entspricht und der Eingangsstrom I_{E} eines Feldgerätes einen vorgebbaren Grenzwert nicht überschreitet. In einem dritten Schritt 503 erfolgt das Regeln der Stromaufnahme I_{V} eines elektrischen Verbrauchers, so dass der Eingangsstrom I_{E} eines Feldgerätes einen maximalen Wert nicht überschreitet.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Feldgerät (10, 401, 402, 403) mit
einem Energiespeicher (105);
wenigstens einem elektrischen Verbraucher (404, 410); und einer Ladeschaltung (420);
wobei der Energiespeicher (105) ausgeführt ist, den elektrischen Verbraucher mit elektrischer Energie zu versorgen;
wobei die Ladeschaltung (420) ausgeführt ist, den Energiespeicher (105) mit Energie zu versorgen, so dass der Energiespeicher die zugeführte Energie speichert;
**gekennzeichnet durch**
eine Eingangsschutzbeschaltung (101) die ausgeführt ist, eine Eingangsstrombelastung des Feldgeräts zu begrenzen; und
eine Ladestromregelungsvorrichtung (100) die ausgeführt ist, einen der Ladeschaltung (420) zugeführten Ladestrom I_{L} zum Laden des Energiespeichers zu regeln, so dass ein Grenzwert für einen Eingangsstrom I_{E}, welcher **durch** die Eingangsschutzschaltung fließt, nicht überschritten wird.

2. Feldgerät (10, 401, 402, 403) nach Anspruch 1,
wobei der Energiespeicher (105) eine Einheit wiederaufladbarer Batterien ist; wobei die Einheit wiederaufladbarer Batterien wenigstens eine wiederaufladbare Batterie aufweist.

3. Feldgerät (10, 401, 402, 403) nach Anspruch 1 oder 2,
wobei der elektrische Verbraucher ein Füllstandsmessgerät (401) ist.

4. Feldgerät (10, 401, 402, 403) nach Anspruch 1 oder 2,
wobei der elektrische Verbraucher ein Durchflussmessgerät (403) ist.

5. Feldgerät (10, 401, 402, 403) nach Anspruch 1 oder 2,
wobei der elektrische Verbraucher ein Druckmessgerät (402) ist.

6. Feldgerät (10, 401, 402, 403) nach einem der Ansprüche 1 bis 5,
wobei eine Stromaufnahme I_{V} des elektrischen Verbrauchers (404, 410) so verändert werden kann, dass der Ladestrom I_{L} einem vorgebbaren Wert folgen kann.

7. Feldgerät (10, 401, 402, 403) nach Anspruch 6,
wobei der vorgebbare Wert für den Ladestrom I_{L} konstant gehalten wird.

8. Feldgerät (10, 401, 402, 403) nach einem der Ansprüche 1 bis 7,
die Ladestromregelungsvorrichtung (100) aufweisend:
einen Stromfühlwiderstand R (201);
einen Operationsverstärker (202);
einen Schaltregler (104);
wobei durch den Stromfühlwiderstand R (201) der Eingangsstrom I_{E} fließen kann, wodurch an dem Stromfühlwiderstand R (201) eine entsprechende Spannung U_{R} abfällt;
wobei der Operationsverstärker (202) mit der Spannung U_{R} als Eingangsspannung betreibbar ist;
wobei eine Ausgangsspannung des Operationsverstärkers (202) auf den Schaltregler (104) führbar ist und den Schaltregler (104) so steuert, dass ein Aufnahmestrom I_{L} oder ein Ausgangsstrom I_{A} des Schaltreglers (104) verändert werden kann;
wobei der Schaltregler (104) von dem Operationsverstärker (202) so angesteuert wird, dass der Aufnahmestrom I_{L} oder der Ausgangsstrom I_{A} des Schaltreglers (104) so verändert wird, dass der Eingangsstrom I_{E} durch den Stromfühlwiderstand R (201) den Grenzwert des Eingangsstroms I_{E} nicht übersteigt.

9. Feldgerät nach Anspruch 8,
wobei der Operationsverstärker (202) als Differenzverstärker geschaltet ist, so dass eine an zwei Eingängen des Operationsverstärkers anliegende Spannungsdifferenz mit einem Verstärkungsfaktor gewichtet an einem Ausgang des Operationsverstärkers ausgegeben wird.

10. Feldgerät nach Anspruch 8 oder 9,
wobei der Stromfühlwiderstand R (201) ein ohmscher Widerstand ist.

## Claims

1. A field device (10, 401, 402, 403), comprising
an energy storage device (105)
at least one electrical consumer (404, 410); and
a charging circuit (420);
wherein the energy storage device (105) is designed to supply the electrical consumer with electrical power;
wherein the charging circuit (420) is designed to supply the energy storage device (105) with energy, so that the energy storage device stores the supplied energy;
**characterized in that**
an input protection circuit (101) is designed to limit an input current load of the field device; and
a charging-current regulating device (100) is designed to regulate a charging current I_{L} fed to the charging circuit (420) for charging the energy storage device so that a limiting value relating to an input current I_{E} that flows through the input protection circuit is not exceeded.

2. The field device (10, 401, 402, 403) according to claim 1,
wherein the energy storage device (105) is a unit of rechargeable batteries; wherein the unit of rechargeable batteries comprises at least one rechargeable battery.

3. The field device (10, 401, 402, 403) according to claim 1 or 2,
wherein the electrical consumer is a fill-level measuring device (401).

4. The field device (10, 401, 402, 403) according to claim 1 or 2,
wherein the electrical consumer is a flow measuring device (403).

5. The field device (10, 401, 402, 403) according to claim 1 or 2,
wherein the electrical consumer is a pressure measuring device (402).

6. The field device (10, 401, 402, 403) according to any one of claims 1 to 5,
wherein a current draw I_{V} of the electrical consumer (404, 410) is alterable in such a manner that the charging current I_{L} follows a specifiable value.

7. The field device (10, 401, 402, 403) according to claim 6,
wherein the specifiable value relating to the charging current I_{L} is kept constant.

8. The field device (10, 401, 402, 403) according to any one of claims 1 to 7, with the charging-current regulating device (100) comprising:
a current sensing resistor R (201);
an operational amplifier (202);
a switching regulator (104);
wherein the input current I_{E} flows through the current sensing resistor R (201), and consequently a corresponding voltage U_{R} drops at the current sensing resistor R (201);
wherein the operational amplifier (202) can be operated with the voltage U_{R} as the input voltage;
wherein an output voltage of the operational amplifier (202) is feedable to the switching regulator (104) and controls the switching regulator (104) in such a manner that a pick-up current I_{L} or an output current I_{A} of the switching regulator can be altered;
wherein the switching regulator (104) is controlled by the operational amplifier (202) in such a manner that the pick-up current I_{L} or the output current I_{A} of the switching regulator (104) is altered in such a manner that the input current I_{E} flowing through the current sensing resistor R (201) does not exceed the limiting value of the input current I_{E}.

9. The field device according to claim 8,
wherein the operational amplifier (202) is switched as a differential amplifier so that a voltage differential present at two inputs of the operational amplifier is output, weighted by an amplification factor, at an output of the operational amplifier.

10. The field device according to claim 8 or 9,
wherein the current sensing resistor R (201) is an ohmic resistor.

## Revendications

1. Appareil de terrain (10, 401, 402, 403), avec
un accumulateur d'énergie (105) ;
au moins un consommateur électrique (404, 410) ; et
un circuit de charge (420) ;
l'accumulateur d'énergie (105) étant réalisé pour alimenter en énergie électrique le consommateur électrique ;
le circuit de charge (420) étant réalisé pour alimenter en énergie l'accumulateur d'énergie (105) de telle sorte que l'accumulateur d'énergie accumule l'énergie amenée ;
**caractérisé par** un câblage de protection d'entrée (101) qui est réalisé pour limiter une charge de courant d'entrée de l'appareil de terrain; et
un dispositif de régulation du courant de charge (100) qui est réalisé pour réguler un courant de charge I_{L} conduit au circuit de charge (420) pour charger l'accumulateur d'énergie de telle sorte qu'une valeur limite d'un courant d'entrée I_{E} qui traverse le circuit de protection d'entrée n'est pas dépassé.

2. Appareil de terrain (10, 401, 402, 403) selon la revendication 1,
l'accumulateur d'énergie (105) étant une unité de batteries rechargeables ;
l'unité de batteries rechargeables présentant au moins une batterie rechargeable.

3. Appareil de terrain (10, 401, 402, 403) selon la revendication 1 ou 2,
le consommateur électrique étant un appareil de mesure de niveau (401).

4. Appareil de terrain (10, 401, 402, 403) selon la revendication 1 ou 2,
le consommateur électrique étant un appareil de mesure de débit (403).

5. Appareil de terrain (10, 401, 402, 403) selon la revendication 1 ou 2,
le consommateur électrique étant un appareil de mesure de pression (402).

6. Appareil de terrain (10, 401, 402, 403) selon une des revendications 1 à 5,
une absorption de courant I_{V} du consommateur électrique (404, 410) pouvant être modifiée de telle façon que le courant de charge I_{L} peut suivre une valeur pouvant être prédéfinie.

7. Appareil de terrain (10, 401, 402, 403) selon la revendication 6,
la valeur pouvant être prédéfinie pour le courant de charge I_{L} étant maintenue constante.

8. Appareil de terrain (10, 401, 402, 403) selon une des revendications 1 à 7,
le dispositif de régulation du courant de charge (100) présentant :
une résistance de détection de courant R (201) ;
un amplificateur opérationnel (202) ;
un régulateur de commutation (104) ;
le courant d'entrée I_{E} pouvant traverser la résistance de détection de courant R (201), ce qui provoque la baisse d'une tension U_{R} correspondante sur la résistance de détection de courant R (201) ;
l'amplificateur opérationnel (202) pouvant être mis en oeuvre avec la tension U_{R} en tant que tension d'entrée ;
une tension de sortie de l'amplificateur opérationnel (202) pouvant être conduite au régulateur de commutation (104) et commandant le régulateur de commutation (104) de telle sorte qu'un courant absorbé I_{L} ou un courant de sortie I_{A} du régulateur de commutation (104) peut être modifié ;
le régulateur de commutation (104) étant piloté par l'amplificateur opérationnel (202) de telle sorte que le courant absorbé I_{L} ou le courant de sortie I_{A} du régulateur de commutation (104) peut être modifié de telle sorte que le courant d'entrée I_{E} traversant la résistance de détection de courant R (201) ne dépasse pas la valeur limite du courant d'entrée I_{E}.

9. Appareil de terrain selon la revendication 8,
l'amplificateur opérationnel (202) étant monté en tant qu'amplificateur différentiel de telle sorte qu'une différence de tension aux deux entrées de l'amplificateur opérationnel est délivrée à une sortie de l'amplificateur opérationnel, pondérée avec un facteur d'amplification.

10. Appareil de terrain selon la revendication 8 ou 9,
la résistance de détection de courant R (201) étant une résistance ohmique.
